# EUROPEAN PATENT APPLICATION

(11) **EP 3 970 826 A1**
(43) Date of publication of application: **23.03.2022**
(21) Application number: 21196806.0
(22) Date of filing: 15.09.2021
(51) Int. Cl.: B01D 29/11, B01D 29/52, B01D 35/30

(54) **BRANCHED FILTER AND METHOD OF USE**

(30) Priority: 18.09.2020 US 202017025220
(71) Applicant: Pall Corporation, Port Washington, NY 11050 (US)
(72) Inventor: ZEILER, Martin, 55543 Bad Kreuznach (DE); BAIR, James A., Cortland, 13045 (US); MILLER, John P., Cortland, 13045 (US)
(74) Representative: Hoeger, Stellrecht & Partner Patentanwälte mbB

(57) **Abstract**

Filters (including curved filters) and filter arrangements comprising a plurality of filter arms, each arm comprising a hollow tube, each hollow tube having a first end and a second end, and a tube inner fluid channel having an inner diameter; the filter further including a first tube connector, comprising a first hollow body having a first hollow body inner diameter, connected to, and in fluid communication with, the hollow tubes, wherein the first hollow body inner diameter is greater than the tube inner fluid channel inner diameters, and filter devices including filters and filter arrangements, and methods of use are disclosed.

## Description

### BACKGROUND OF THE INVENTION

In order to achieve filtration performance targets, it may be necessary to use large and/or multiple filtration devices, or use filter devices that have to be replaced more often due to an increase in pressure drop resulting from insufficient filtration area. Either alternative can result in increased cost.

Thus, there is a need for improved filters. The present invention provides for ameliorating at least some of the disadvantages of the prior art. These and other advantages of the present invention will be apparent from the description as set forth below.

### BRIEF SUMMARY OF THE INVENTION

An aspect of the invention provides a filter comprising a plurality of filter arms, the plurality of filter arms comprising at least: a first filter arm comprising a first hollow tube, the first hollow tube having a first end and a second end, and a first tube inner fluid channel having an inner diameter; and, a second filter arm comprising a second hollow tube, the second hollow tube having a first end and a second end, and a second tube inner fluid channel having an inner diameter; the filter further comprising: a first tube connector, comprising a first hollow body having a first hollow body inner diameter, connected to, and in fluid communication with, the first and second hollow tubes, wherein the first hollow body inner diameter is greater than the tube inner fluid channel inner diameters.

Another aspect of the invention provides a filter comprising a plurality of filter arms, the plurality of filter arms comprising at least: a first filter arm comprising a first hollow tube, the first hollow tube having a first end and a second end, and a first tube inner fluid channel having an inner diameter; and, a second filter arm comprising a second hollow tube, the second hollow tube having a first end and a second end, and a second tube inner fluid channel having an inner diameter; the filter further comprising: a first tube connector, comprising a first hollow body having a first hollow body inner diameter, connected to, and in fluid communication with, the first and second hollow tubes, wherein the first hollow body inner diameter is greater than the tube inner fluid channel inner diameters; and, a second tube connector, comprising a second hollow body having a second hollow body inner diameter, connected to, and in fluid communication with, the first hollow body, wherein the second hollow body inner diameter is greater than the first hollow body inner diameter.

Yet another aspect of the invention provide a filter arrangement, the filter arrangement including at least one first filter, the at least one first filter comprising a plurality of filter arms, the plurality of filter arms comprising at least: a first filter arm comprising a first hollow tube, the first hollow tube having a first end and a second end, and a first tube inner fluid channel having an inner diameter; and, a second filter arm comprising a second hollow tube, the second hollow tube having a first end and a second end, and a second tube inner fluid channel having an inner diameter; the filter further comprising: a first tube connector, comprising a first hollow body having a first hollow body inner diameter, connected to, and in fluid communication with, the first and second hollow tubes, wherein the first hollow body inner diameter is greater than the tube inner fluid channel inner diameters; and, at least one second filter, the at least one second filter comprising a plurality of filter arms, the plurality of filter arms comprising at least: a first filter arm comprising a first hollow tube, the first hollow tube having a first end and a second end, and a first tube inner fluid channel having an inner diameter; and, a second filter arm comprising a second hollow tube, the second hollow tube having a first end and a second end, and a second tube inner fluid channel having an inner diameter; the filter further comprising: a first tube connector, comprising a first hollow body having a first hollow body inner diameter, connected to, and in fluid communication with, the first and second hollow tubes, wherein the first hollow body inner diameter is greater than the tube inner fluid channel inner diameters; and, a second tube connector, comprising a second hollow body having a second hollow body inner diameter, connected to, and in fluid communication with, the first hollow body, wherein the second hollow body inner diameter is greater than the first hollow body inner diameter.

Still another aspect of the invention provides a curved filter comprising a plurality of curved filter arms, the plurality of curved filter arms comprising at least: a first curved filter arm comprising a curved first hollow tube, the curved first hollow tube having a first end and a second end, and a curved first tube inner fluid channel having an curved first tube inner diameter; and, a second curved filter arm comprising a curved second hollow tube, the curved second hollow tube having a first end and a second end, and a curved second tube inner fluid channel having curved second tube inner diameter; the curved filter further comprising: a curved first tube connector, comprising a curved first hollow body having a first hollow body inner diameter, connected to, and in fluid communication with, the curved first and second hollow tubes, wherein the curved first hollow body inner diameter is greater than the curved first and second tube inner fluid channel inner diameters; and, a curved second tube connector, comprising a curved second hollow body having a curved second hollow body inner diameter, connected to, and in fluid communication with, the curved first hollow body, wherein the curved second hollow body inner diameter is greater than the curved first hollow body inner diameter.

In yet another aspect, a filter comprising a plurality of filter arms is provided, the plurality of filter arms comprising at least: a first filter arm comprising a first hollow tube, the first hollow tube having a first end and a second end, and a first tube inner fluid channel having a tapered inner diameter wherein the inner diameter is narrower at the first end, and wider at the second end; and, a second filter arm comprising a second hollow tube, the second hollow tube having a first end and a second end, and a second tube inner fluid channel having a tapered inner diameter wherein the inner diameter is narrower at the first end, and wider at the second end; the filter further comprising: a first tube connector, comprising a first hollow body having a first end and a second end, and a first hollow body tapered inner diameter, connected to, and in fluid communication with, the first and second hollow tubes, wherein the first hollow body has an inner diameter that is narrower at the first end of the first tube connector where it connects with the first and second hollow tubes, and wider at the second end of the first tube connector, wherein the first hollow body inner diameter is greater at both the first end and the second end than the inner diameters at both the first end and second end of each of the first and second hollow tubes; and, a second tube connector, comprising a second hollow body having a first end and a second end, and a second hollow body tapered inner diameter, connected to, and in fluid communication with, the first hollow body, wherein the second hollow body has an inner diameter that is narrower at the first end of the second tube connector where it connects with the first tube connector, and wider at the second end of the second tube connector, wherein the second hollow body inner diameter is greater at both the first end and the second end than the inner diameters at both the first end and second end of the first tube connector.

In other aspects, filter devices and methods of filtration using the filter devices are provided, the filter devices comprising filter housings having an inlet and an outlet and defining a fluid flow path between the inlet and the outlet, with aspects of filters (including curved filters) and/or filter arrangements arranged in the housings across the fluid flow path.

### BRIEF DESCRIPTION OF THE SEVERAL VIEWS OF THE DRAWING(S)

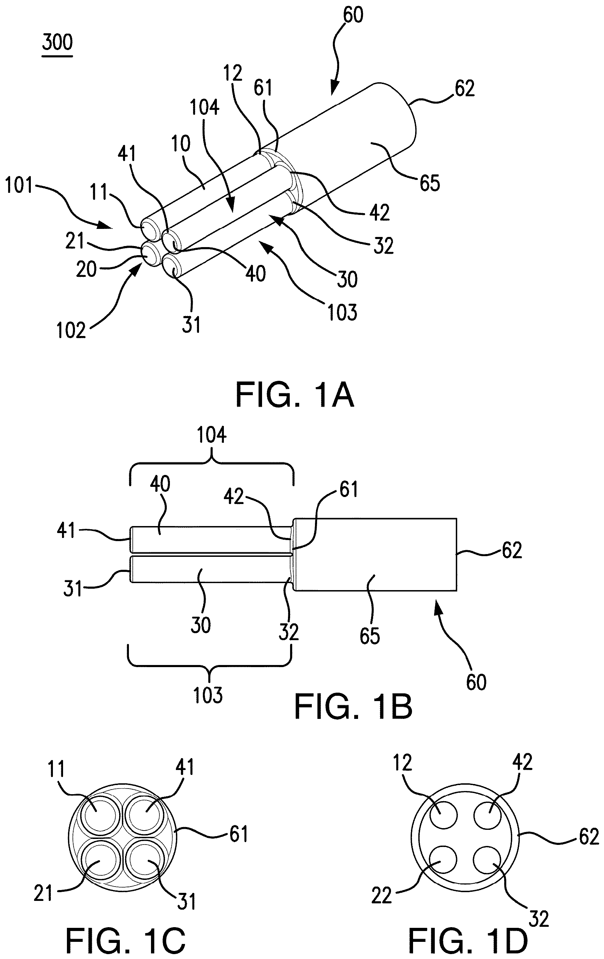

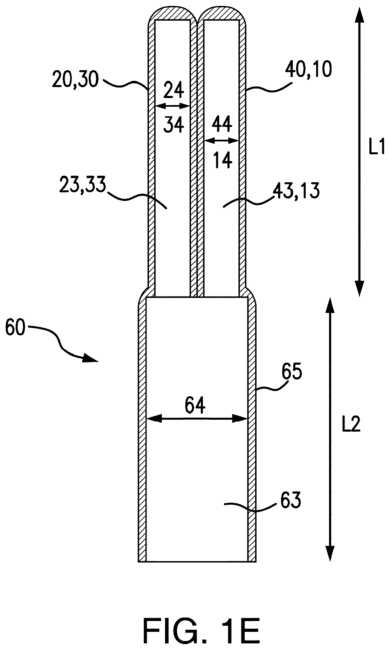

Figures 1A-1E show a filter comprising a four filter arms according to an aspect of the invention, each arm comprising a hollow tube; the filter further comprising a first tube connector, connected to, and in fluid communication with, the hollow tubes. Figure 1A shows a perspective view; Figure 1B shows a side view; Figure 1C shows a top view; Figure 1D shows a bottom view, and Figure 1E shows a side cross-sectional view.

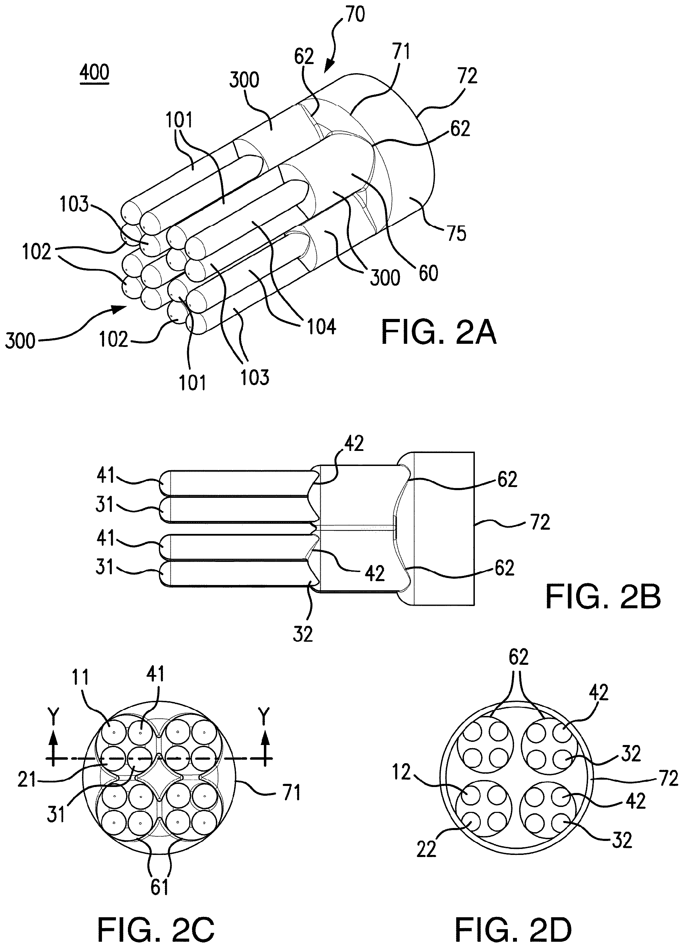

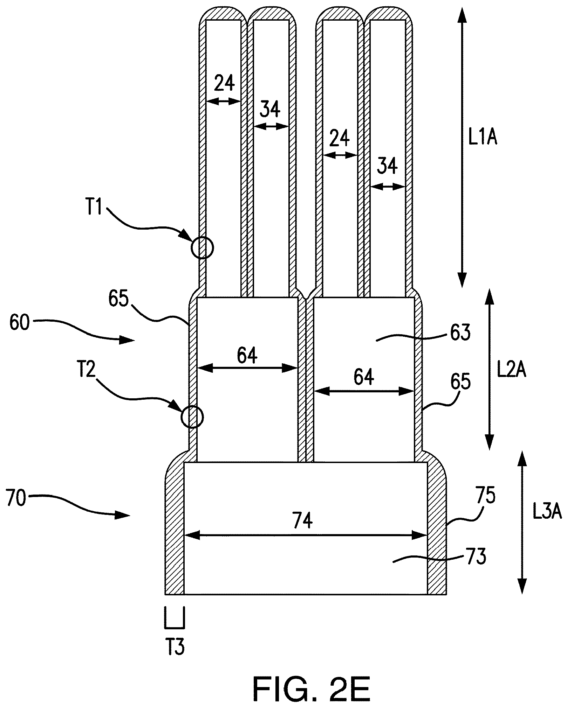

Figures 2A-2E show a filter according to another aspect of the invention, including a plurality of filters as generally shown in Figures 1A-1E, wherein each filter additionally has a second tube connector connected to, and in fluid communication with, each of the first tube connectors. Figure 2A shows a top perspective view, Figure 2B shows a side cross-sectional view, Figure 2C shows a top view, Figure 2D shows a bottom view, and Figure 2E shows an enlarged side cross-sectional view of the filter along line Y-Y of Figure 2C, also showing different lengths of the hollow tubes, first connectors, and the second connector, of the filter, as well as different thicknesses of the walls of the hollow tubes, first connectors, and the second connector.

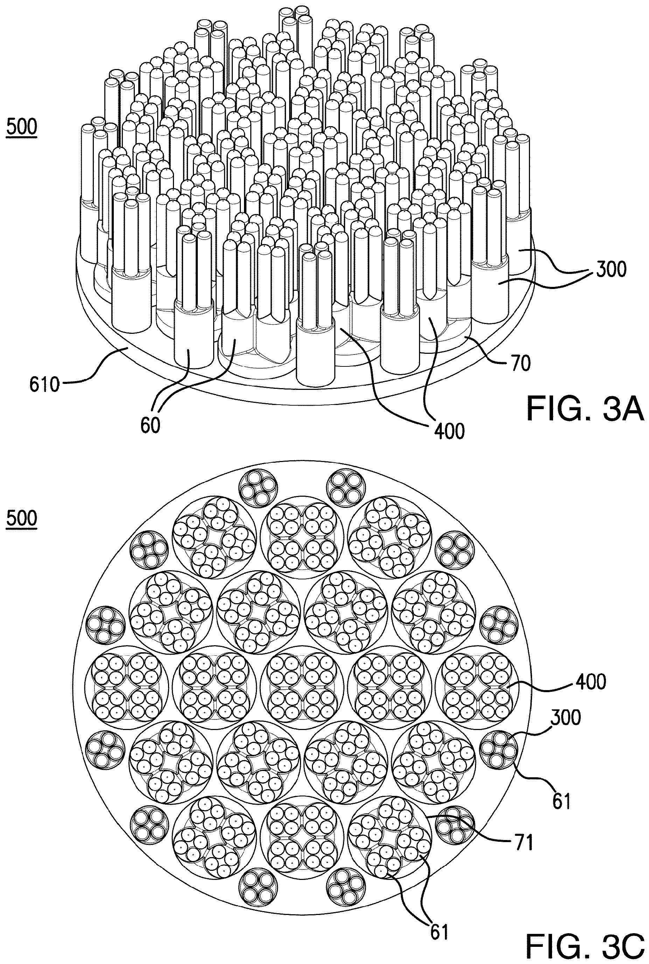

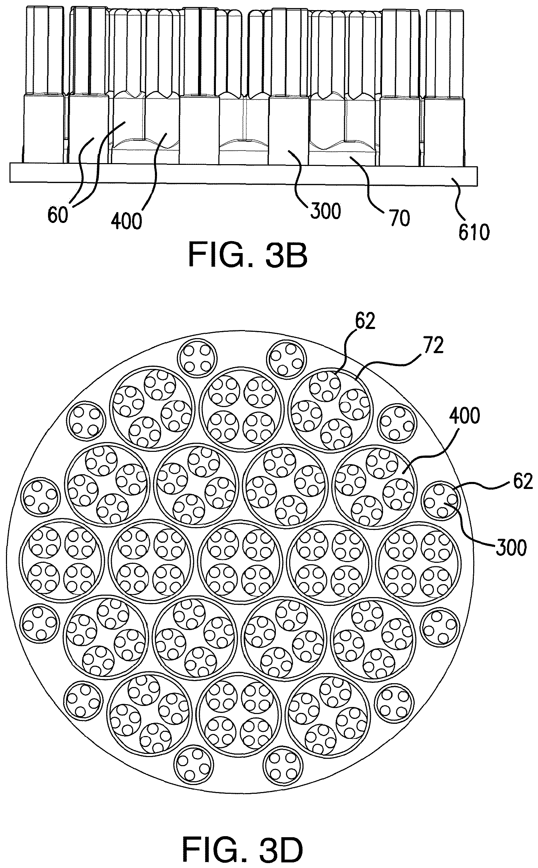

Figures 3A-3D show a filter arrangement according to an aspect of the invention, including a plurality of filters as generally shown in Figures 1A-1D, and a plurality of filters as generally shown in Figures 2A-2D, arranged in an array (wherein the filters shown in Figures 2A-2D are in a generally hexagonally shaped array, and the filters shown in Figures 1A-1D are in a generally circular array surrounding the filters shown in Figures 2A-2D). Figure 3A shows a top perspective view, Figure 3B shows a side view, Figure 3C shows a top view, and Figure 3D shows a bottom view.

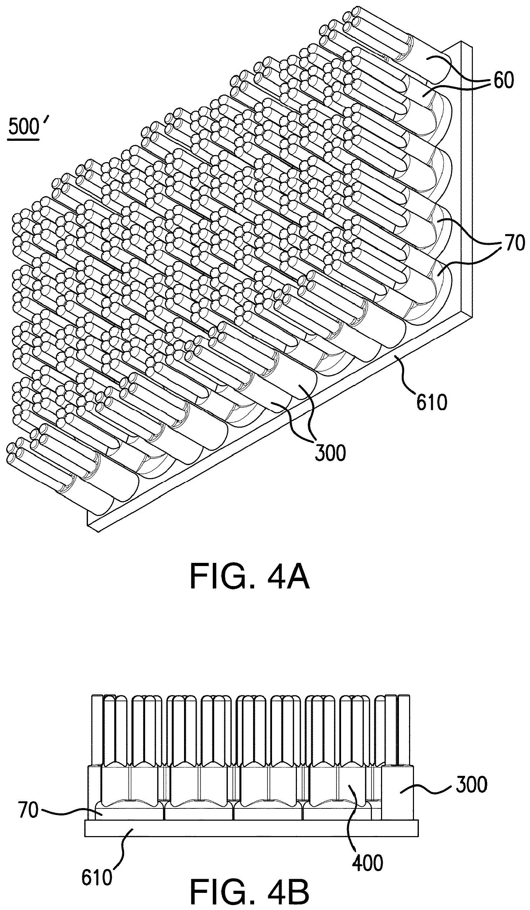

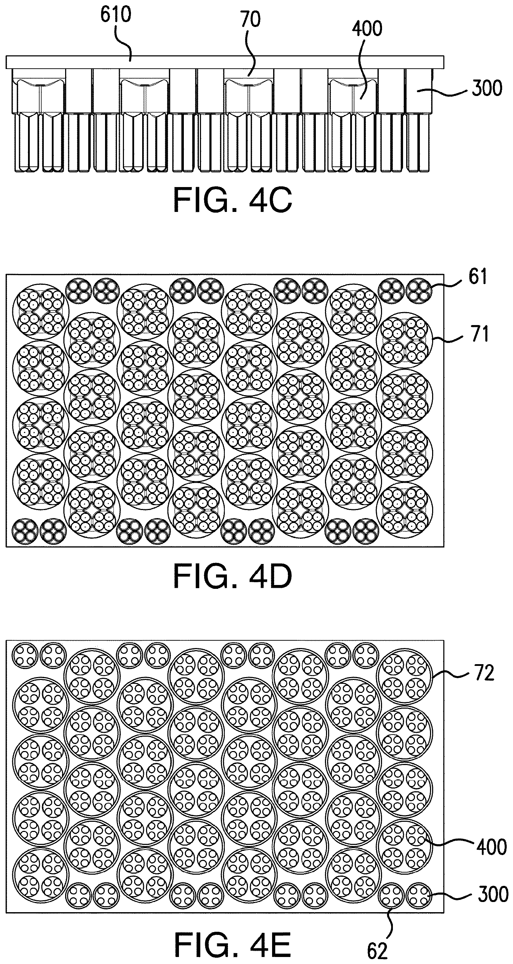

Figures 4A-4E show a filter arrangement according to another aspect of the invention, including a plurality of filters as generally shown in Figures 1A-1D, and a plurality of filters as generally shown in Figures 2A-2D, arranged in a generally rectangular array, with the plurality of filters as shown in Figures 1A-1D arranged toward the outer longer sides of the rectangular array. Figure 4A shows a top perspective view, Figure 4B shows a side view of a shorter side, Figure 4C shows a side view of a longer side, Figure 4D shows a top view, and Figure 4E shows a bottom view.

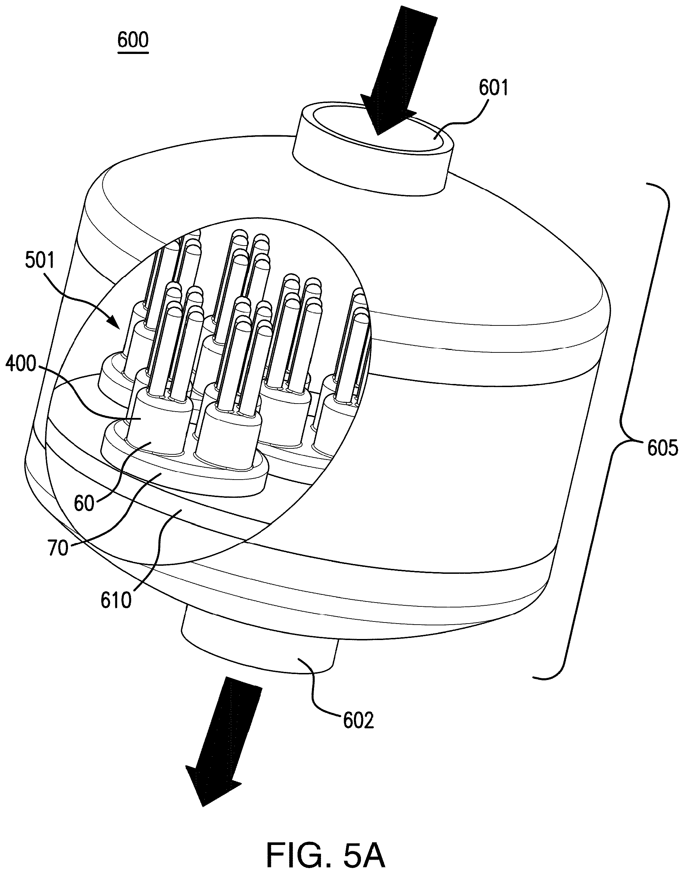

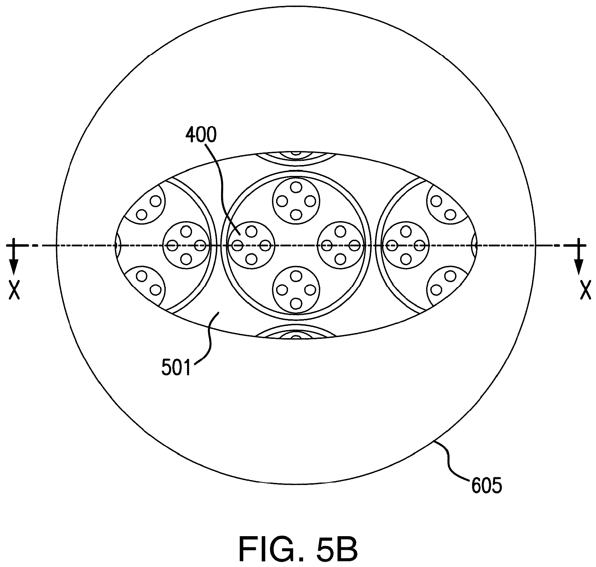

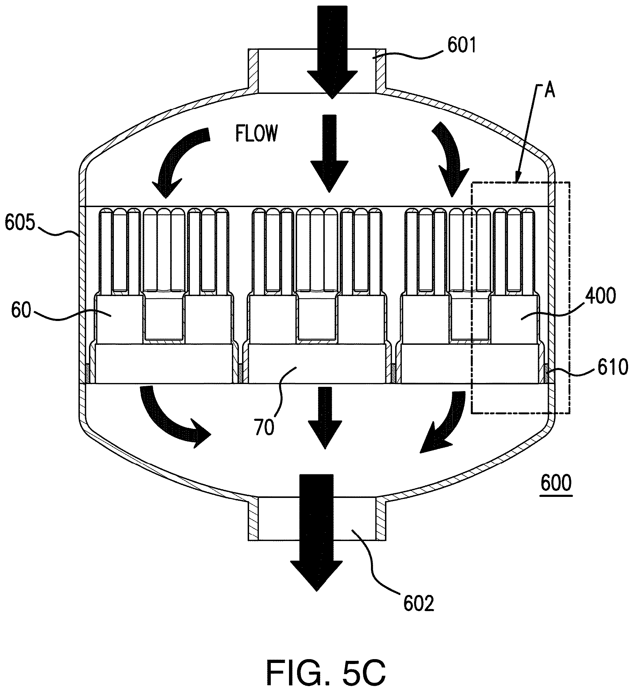

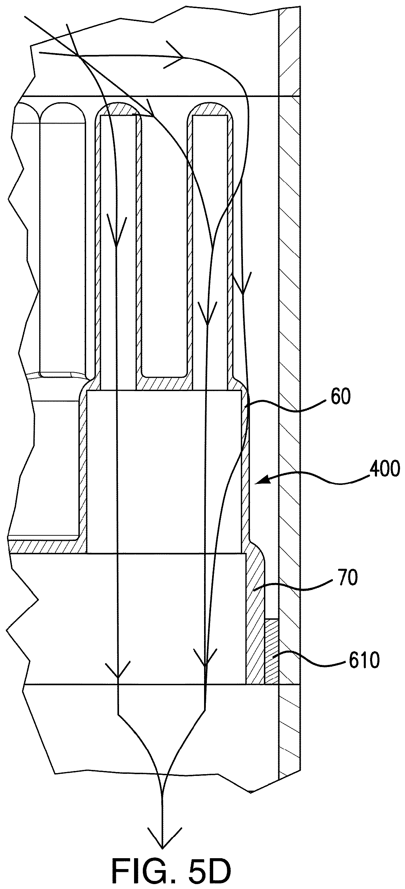

Figures 5A-5C show a filter device comprising a filter housing having an inlet and an outlet and defining a fluid flow path between the inlet and the outlet, with the filter arrangement shown in Figures 2A-2E arranged in the housing across the fluid flow path according to an aspect of the invention. Figure 5A shows a side perspective partial cut-away view, Figure 5B shows a top partial cut away view of the filter device shown in Figure 5A; Figure 5C shows a side cross-sectional view along line X-X of Figure 5B, with arrows showing the fluid flow path, and Figure 5D shows the fluid flow path through one of the filters (detail A) in the filter arrangement shown in Figure 5C.

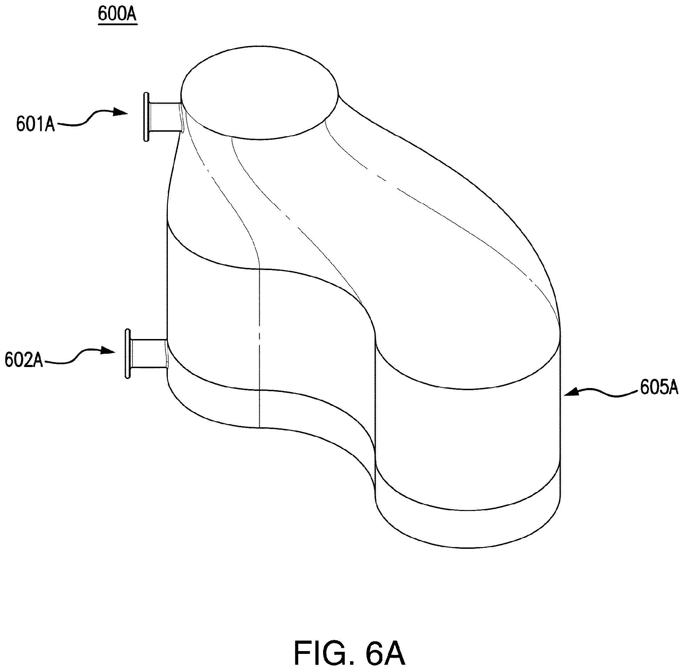

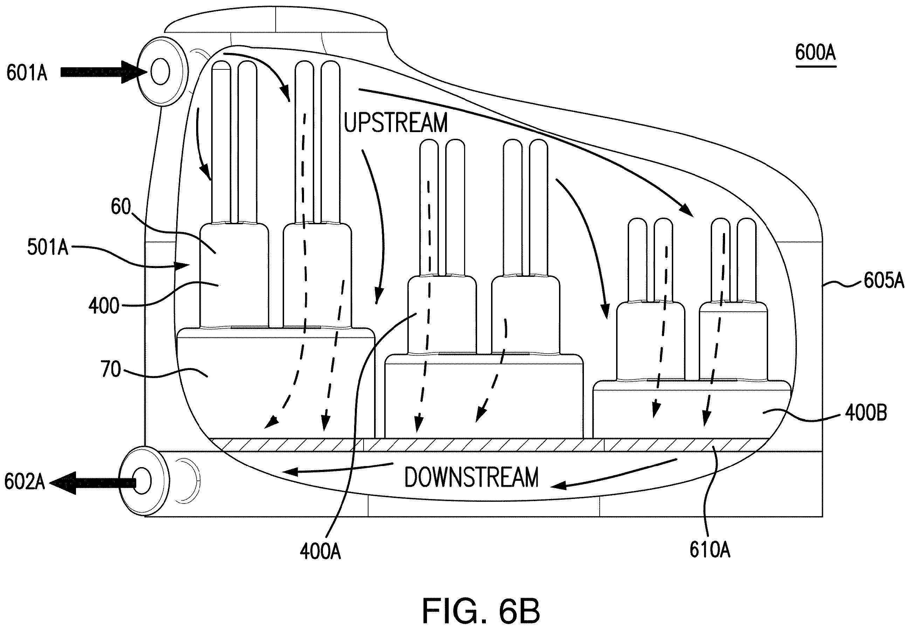

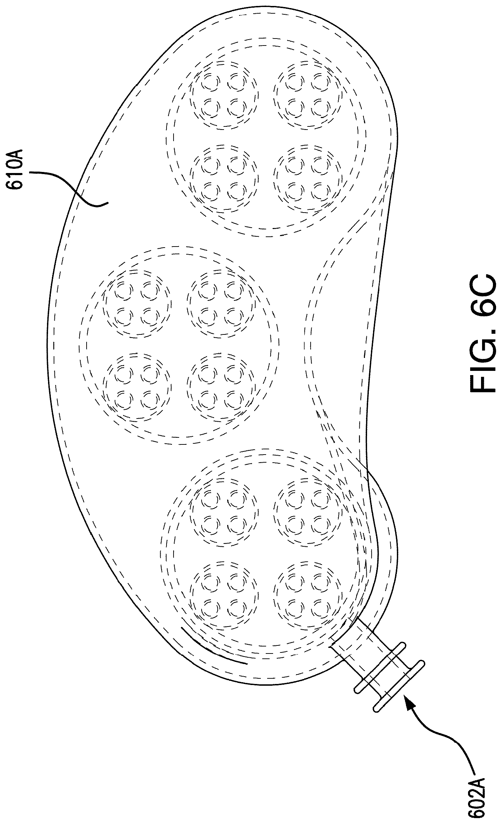

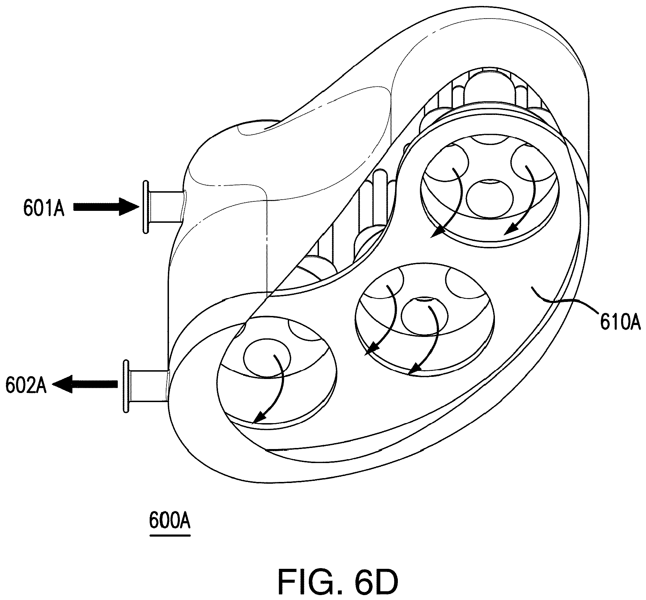

Figures 6A-6D show a filter device comprising a filter housing having an inlet and an outlet and defining a fluid flow path between the inlet and the outlet, with the filter arrangement similar to that shown in Figures 2A-2E (with the exception that the individual filters have different lengths) arranged in the housing across the fluid flow path according to an aspect of the invention. Figure 6A shows an orthogonal view of the filter housing, Figure 6B shows a front cut-away view with arrows showing the fluid flow path, Figure 6C shows a top cut-away view, and Figure 6D shows a bottom-cut away view with arrows showing the fluid flow path.

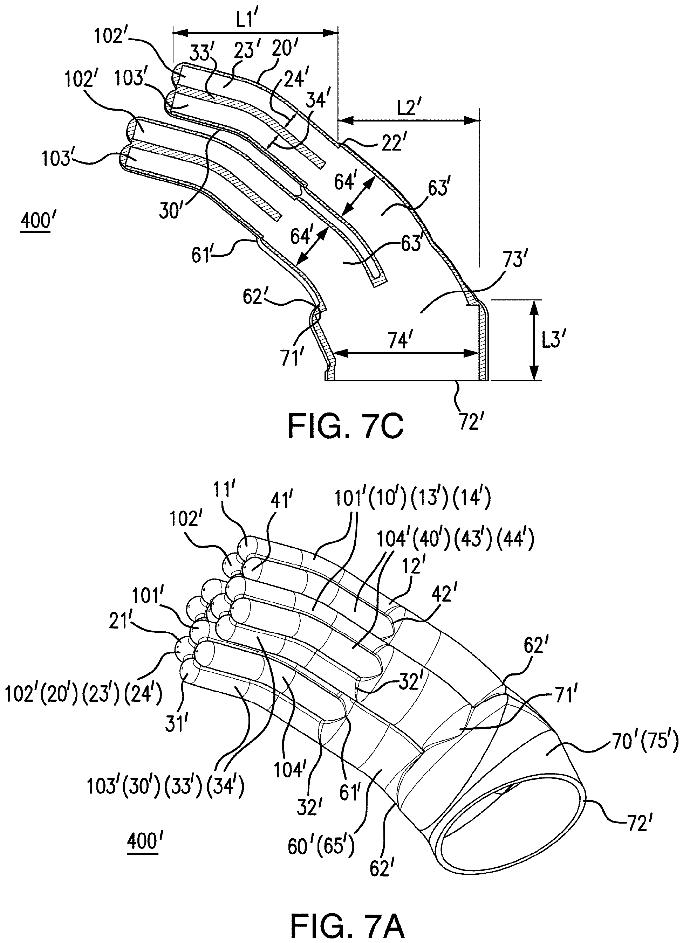

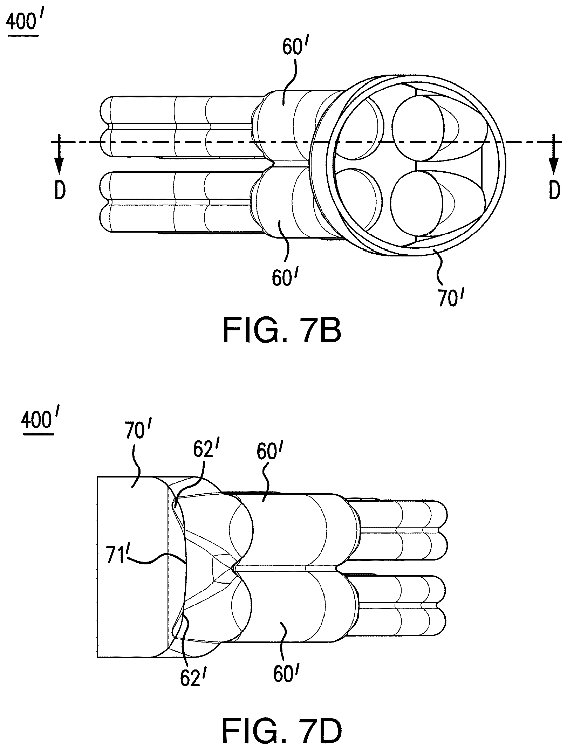

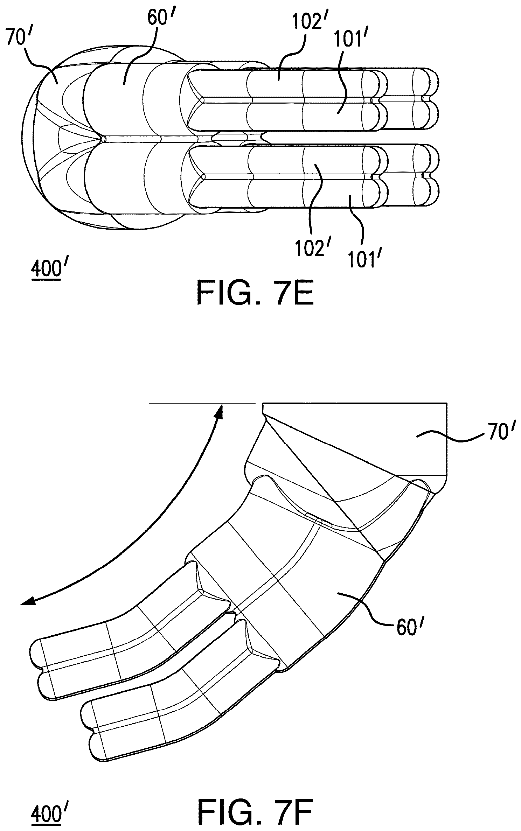

Figure 7A-7F show a curved filter according to another aspect of the invention, including a plurality of sets of curved filter arms, each filter arm comprising a curved hollow tube, the curved filter further comprising: curved first tube connectors comprising curved first hollow bodies, connected to, and in fluid communication with, the sets of curved hollow tubes; and, a curved second tube connector, comprising a second hollow body having a second hollow body inner diameter, connected to, and in fluid communication with, the first hollow bodies. Figure 7A shows an orthogonal view; Figure 7B shows a bottom view; Figure 7C show a cross-section side view along line D-D of Figure 7B; Figure 7D shows a back view; Figure 7E shows a top view; and Figure 7F shows a front view.

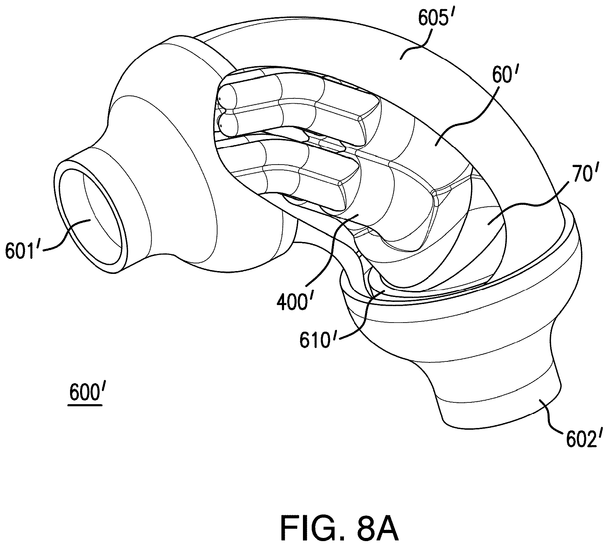

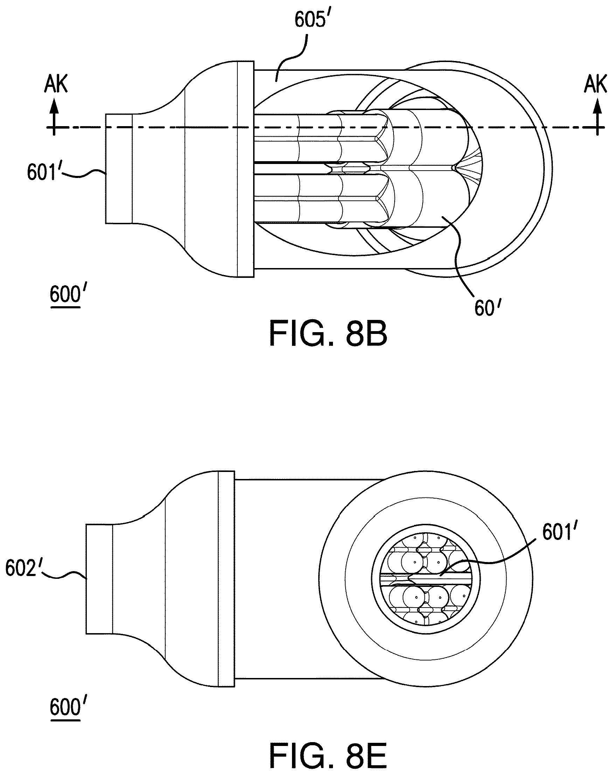

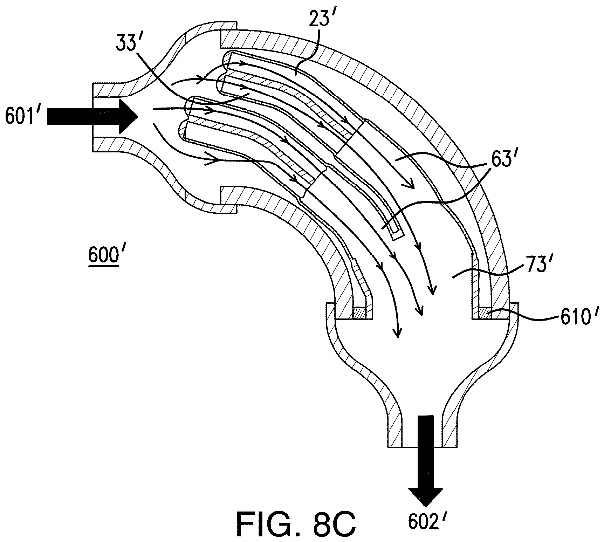

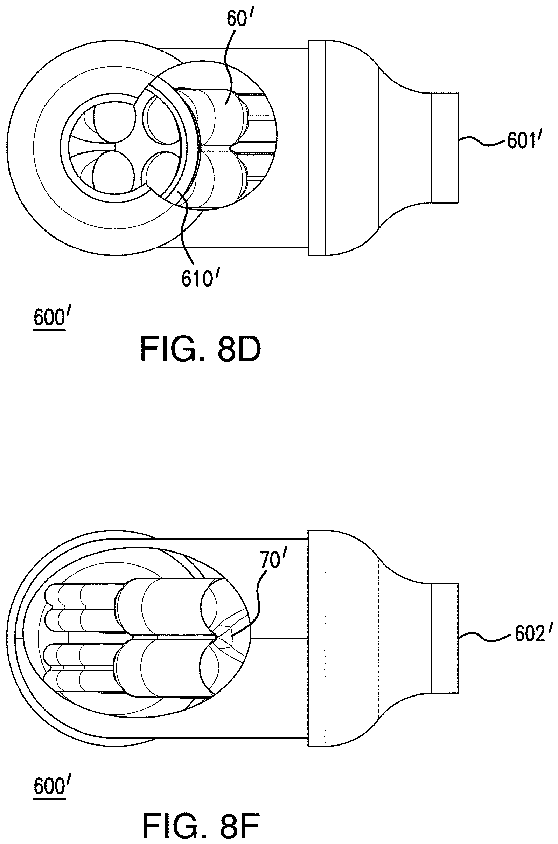

Figures 8A-8F show a filter device comprising a filter housing having an inlet and an outlet and defining a fluid flow path between the inlet and the outlet, with the filter shown in Figures 7A-7F arranged in the housing across the fluid flow path according to an aspect of the invention. Figure 8A shows a partially cut-away orthogonal view; Figure 8B shows a top view; Figure 8C shows a cross-section side view of Figure 8B, with arrows showing the fluid flow path; Figure 8D shows a bottom view; Figure 8E shows a left side view; and Figure 8F shows a right side view.

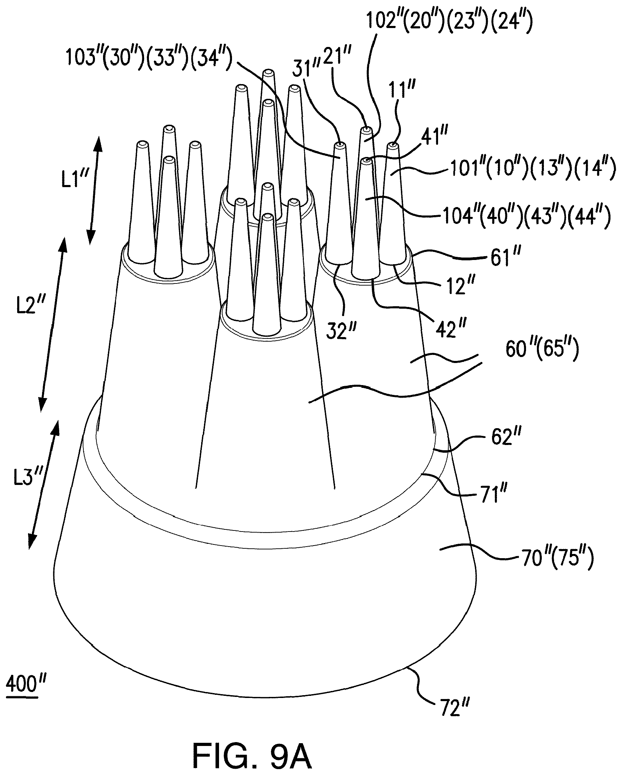

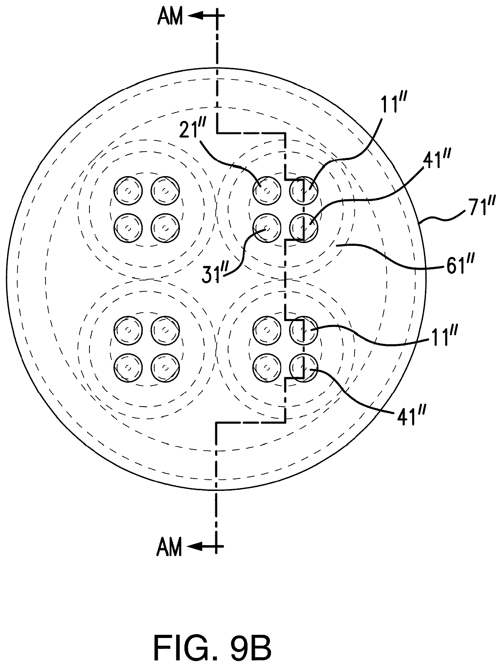

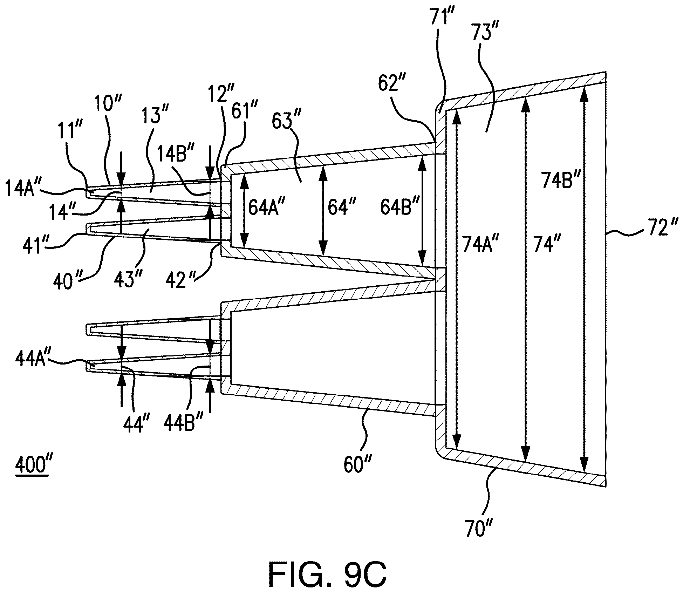

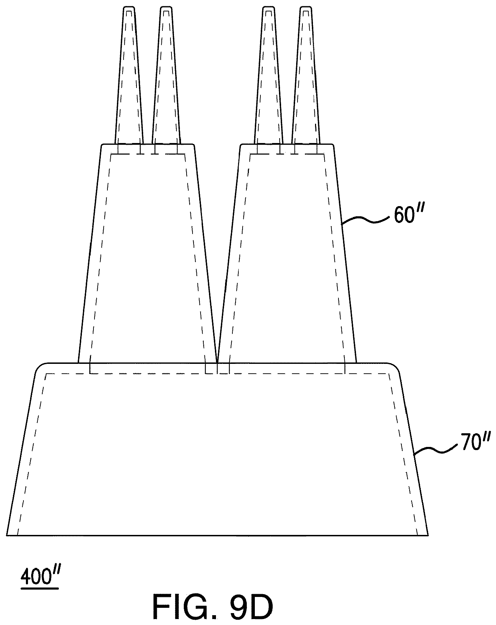

Figures 9A-9D show a filter according to another aspect of the invention, including a plurality of sets of filter arms, each filter arm comprising a hollow tube having a tapered inner diameter, the filter further comprising: first tube connectors comprising first hollow bodies comprising tapered inner diameters, connected to, and in fluid communication with, the sets of hollow tubes; and, a second tube connector, comprising a second hollow body having a tapered inner diameter, connected to, and in fluid communication with, the first hollow bodies. Figure 9A shows a top perspective view; Figure shows a top cut-away view; Figure 9C shows a side cross-section view along line AM-AM of Figure 9B, and Figure 9D shows a front view.

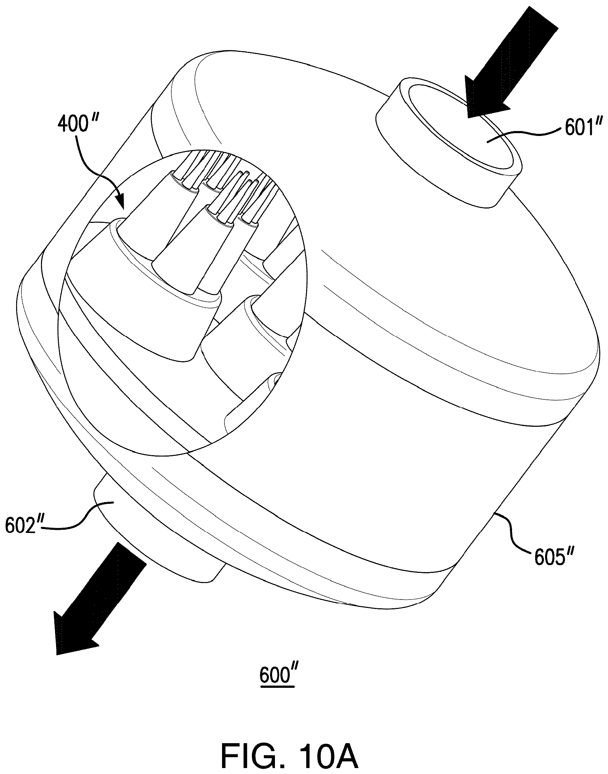

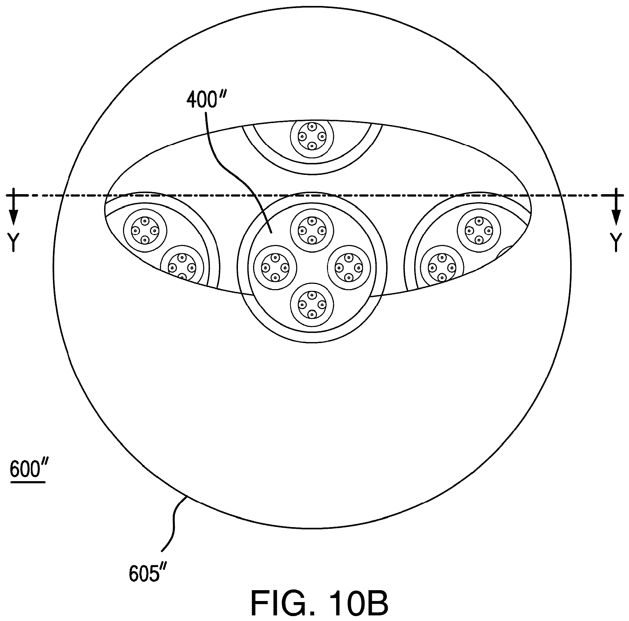

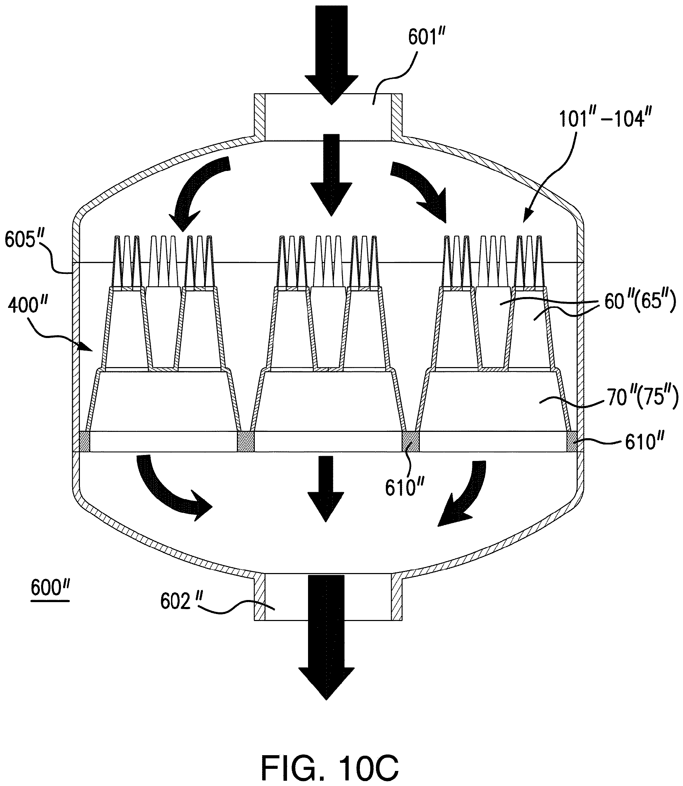

Figures 10A-10C show a filter device comprising a filter housing having an inlet and an outlet and defining a fluid flow path between the inlet and the outlet, with the filter shown in Figures 9A-9D arranged in the housing across the fluid flow path according to an aspect of the invention. Figure 10A shows a side perspective partial cut-away view, Figure 10B shows a top partial cut away view of the filter device shown in Figure 10A; Figure 10C shows a side cross-sectional view along line Y-Y of Figure 10B, with arrows showing the fluid flow path

### DETAILED DESCRIPTION OF THE INVENTION

An aspect of the invention provides a filter comprising a plurality of filter arms, the plurality of filter arms comprising at least: a first filter arm comprising a first hollow tube, the first hollow tube having a first end and a second end, and a first tube inner fluid channel having an inner diameter; and, a second filter arm comprising a second hollow tube, the second hollow tube having a first end and a second end, and a second tube inner fluid channel having an inner diameter; the filter further comprising: a first tube connector, comprising a first hollow body having a first hollow body inner diameter, connected to, and in fluid communication with, the first and second hollow tubes, wherein the first hollow body inner diameter is greater than the tube inner fluid channel inner diameters.

Another aspect of the invention provides a filter comprising a plurality of filter arms, the plurality of filter arms comprising at least: a first filter arm comprising a first hollow tube, the first hollow tube having a first end and a second end, and a first tube inner fluid channel having an inner diameter; and, a second filter arm comprising a second hollow tube, the second hollow tube having a first end and a second end, and a second tube inner fluid channel having an inner diameter; the filter further comprising: a first tube connector, comprising a first hollow body having a first hollow body inner diameter, connected to, and in fluid communication with, the first and second hollow tubes, wherein the first hollow body inner diameter is greater than the tube inner fluid channel inner diameters; and, a second tube connector, comprising a second hollow body having a second hollow body inner diameter, connected to, and in fluid communication with, the first hollow body, wherein the second hollow body inner diameter is greater than the first hollow body inner diameter.

Yet another aspect of the invention provide a filter arrangement, the filter arrangement including at least one first filter, the at least one first filter comprising a plurality of filter arms, the plurality of filter arms comprising at least: a first filter arm comprising a first hollow tube, the first hollow tube having a first end and a second end, and a first tube inner fluid channel having an inner diameter; and, a second filter arm comprising a second hollow tube, the second hollow tube having a first end and a second end, and a second tube inner fluid channel having an inner diameter; the filter further comprising: a first tube connector, comprising a first hollow body having a first hollow body inner diameter, connected to, and in fluid communication with, the first and second hollow tubes, wherein the first hollow body inner diameter is greater than the tube inner fluid channel inner diameters; and, at least one second filter, the at least one second filter comprising a plurality of filter arms, the plurality of filter arms comprising at least: a first filter arm comprising a first hollow tube, the first hollow tube having a first end and a second end, and a first tube inner fluid channel having an inner diameter; and, a second filter arm comprising a second hollow tube, the second hollow tube having a first end and a second end, and a second tube inner fluid channel having an inner diameter; the filter further comprising: a first tube connector, comprising a first hollow body having a first hollow body inner diameter, connected to, and in fluid communication with, the first and second hollow tubes, wherein the first hollow body inner diameter is greater than the tube inner fluid channel inner diameters; and, a second tube connector, comprising a second hollow body having a second hollow body inner diameter, connected to, and in fluid communication with, the first hollow body, wherein the second hollow body inner diameter is greater than the first hollow body inner diameter.

Still another aspect of the invention provides a curved filter comprising a plurality of curved filter arms, the plurality of curved filter arms comprising at least: a first curved filter arm comprising a curved first hollow tube, the curved first hollow tube having a first end and a second end, and a curved first tube inner fluid channel having an curved first tube inner diameter; and, a second curved filter arm comprising a curved second hollow tube, the curved second hollow tube having a first end and a second end, and a curved second tube inner fluid channel having curved second tube inner diameter; the curved filter further comprising: a curved first tube connector, comprising a curved first hollow body having a first hollow body inner diameter, connected to, and in fluid communication with, the curved first and second hollow tubes, wherein the curved first hollow body inner diameter is greater than the curved first and second tube inner fluid channel inner diameters; and, a curved second tube connector, comprising a curved second hollow body having a curved second hollow body inner diameter, connected to, and in fluid communication with, the curved first hollow body, wherein the curved second hollow body inner diameter is greater than the curved first hollow body inner diameter.

In yet another aspect, a filter comprising a plurality of filter arms is provided, the plurality of filter arms comprising at least: a first filter arm comprising a first hollow tube, the first hollow tube having a first end and a second end, and a first tube inner fluid channel having a tapered inner diameter wherein the inner diameter is narrower at the first end, and wider at the second end; and, a second filter arm comprising a second hollow tube, the second hollow tube having a first end and a second end, and a second tube inner fluid channel having a tapered inner diameter wherein the inner diameter is narrower at the first end, and wider at the second end; the filter further comprising: a first tube connector, comprising a first hollow body having a first end and a second end, and a first hollow body tapered inner diameter, connected to, and in fluid communication with, the first and second hollow tubes, wherein the first hollow body has an inner diameter that is narrower at the first end of the first tube connector where it connects with the first and second hollow tubes, and wider at the second end of the first tube connector, wherein the first hollow body inner diameter is greater at both the first end and the second end than the inner diameters at both the first end and second end of each of the first and second hollow tubes; and, a second tube connector, comprising a second hollow body having a first end and a second end, and a second hollow body tapered inner diameter, connected to, and in fluid communication with, the first hollow body, wherein the second hollow body has an inner diameter that is narrower at the first end of the second tube connector where it connects with the first tube connector, and wider at the second end of the second tube connector, wherein the second hollow body inner diameter is greater at both the first end and the second end than the inner diameters at both the first end and second end of the first tube connector.

In accordance with some aspects of the invention, the plurality of filter arms are typically arranged parallel or generally parallel to one another, and the filters can be arranged vertically, horizontally, and/or at an angle.

Aspects of filters can include filter arms including any number of hollow tubes (including straight hollow tubes, straight hollow tubes with tapered inner diameters, or curved hollow tubes), and, if desired, any number of first tube connectors and second tube connectors (including straight, straight tapered diameters, or curved, first and second tube connectors).

Aspects of filters can have any number of sets of a plurality of filter arms, and each set can communicate with a separate first tube connector, and a plurality of separate first tube connectors can communicate with a common second tube connector.

Another aspect of the invention provides a method of filtering fluid, the method comprising passing the fluid through an aspect of the filter or filter arrangement.

In other aspects, filter devices and methods of filtration using the filter devices are provided, the filter devices comprising filter housings having an inlet and an outlet and defining a fluid flow path between the inlet and the outlet, with aspects of filters and/or filter arrangements arranged in the housings across the fluid flow path.

Preferably, each of the hollow tubes (including each of the curved hollow tubes) have porous walls, and the closed ends of the hollow tubes are also porous.

Filters and filter arrangements can be arranged for outside-in filter flow, or arranged for inside-out filter flow. In some aspects, outside-in flow filter can be desirable where increased filter area is preferred, and in some other aspects, inside-out filter flow is desirable where increased strength is preferred.

Each of the components of the invention will now be described in more detail below, wherein like components have like reference numbers.

Figures 1A-1E show an aspects of a filter comprising a plurality of filter arms, each filter arm comprising a hollow tube, the filter further comprising a first tube connector comprising a first hollow body wherein the first tube connector is connected to, and in fluid communication with, the hollow tubes.

In accordance with the aspect illustrated in Figures 1A-1E, a filter 300 comprises a first filter arm 101 comprising a first hollow tube 10 having a first end 11, a second end 12, a first hollow tube inner fluid channel 13 having an inner diameter 14; a second filter arm 102 comprising a second hollow tube 20 having a first end 21, a second end 22, a second hollow tube inner fluid channel 23 having an inner diameter 24; a third filter arm 103 comprising a third hollow tube 30 having a first end 31, a second end 32, a third hollow tube inner fluid channel 33 having an inner diameter 34; and a fourth filter arm 104 comprising a fourth hollow tube 40 having a first end 41, a second end 42, a fourth hollow tube inner fluid channel 43 having an inner diameter 44; and the filter further comprises a first tube connector 60, comprising a first hollow body 65, having a first end 61, and a second end 62, a first hollow body inner fluid channel 63 having a first hollow body inner diameter 64, wherein the first tube connector is connected to, and in fluid communication with, the second ends 12, 22, 32, 42 of the first, second, third, and fourth hollow tubes 10, 20, 30, 40 wherein the first hollow body inner diameter 64 is greater than each of the tube inner fluid channel inner diameters 14, 24, 34, and 44. In this illustrated aspect, all of the 4 filter arms have the same length LI, and the first connector has a length L2, wherein L1>L2.

Figures 2A-2E show aspects of a filter 400, comprising a plurality of filters 300 as generally shown in Figures 1A-1E (comprising a plurality of filter arms 101-104, each arm respectively comprising a first, second, third, and fourth hollow tube 10, 20, 30, 40 and a first connector 60), wherein each filter 300 further comprises a second tube connector 70, comprising a second hollow body 75, having a first end 71, and a second end 72 (the second tube connector having a total length L3A), a second hollow body inner fluid channel 73 having a second hollow body inner diameter 74, wherein the first end 71 of the second tube connector 70 is connected to, and in fluid communication with, the second end 62 of the first hollow body 65, wherein the second hollow body inner diameter 74 is greater than the first hollow body inner diameter 64, and the first hollow body diameter 64 is greater than each of the tube inner fluid channel inner diameters 14, 24, 34, and 44. In this illustrated aspect, all of the 4 filter arms have the same length L1A, the first connector has a length L2A, and the second connector has a length L3A wherein LIA>L2A>L3A.

The relationships between the lengths of the filter arms, first connectors, and second connectors, are not limited to those as illustrated, the various lengths can be all equal, or two can be equal, or, for example, LIA<L2A>L3A, etc. Additionally, or alternatively, in those aspects including a plurality of filters, the relationships between the lengths of the filter arms, first connectors, and second connectors, can be different for different filters in the same filter device, e.g., as shown in Figure 6B.

Typically, as illustrated in Figure 2E, there are different thicknesses of the walls of the hollow tubes, first connectors, and the second connector, wherein the walls of the hollow tubes (T1) are thinner than the walls of the first tube connector (T2), and the walls of the first tube connector are thinner than the walls of the second tube connector (T3).

Figures 3A-3D show a filter arrangement 500 according to another aspect of the invention, the filter arrangement 500 including a plurality of filters 300 (first filters) as generally shown in Figures 1A-1D, and a plurality of filters 400 (second filters) as generally shown in Figures 2A-2D, arranged in an array (wherein the filters 400 are in a generally hexagonally shaped array, and the filters 300 are in a generally circular array surrounding the filters 400), wherein the first and second filters are mounted on a barrier 610.

Figures 4A-4E show a filter arrangement 500' according to another aspect of the invention, the filter arrangement 500' including a plurality of filters 300 (first filters) as generally shown in Figures 1A-1D, and a plurality of filters 400 (second filters) as generally shown in Figures 2A-2D, arranged in a generally rectangular array, with the plurality of filters 300 arranged toward the outer longer sides of the rectangular array, wherein the first and second filters are mounted on a barrier 610.

In some aspects, curved filters can provide more filter area with the same outside diameter than straight filters. In the aspect illustrated in Figure 7F, the overall angle of the curved filter with respect to the base of the curved second tube connector can be varied to fit into the space available.

In accordance with the aspect illustrated in Figures 7A-7F, a curved filter 400' comprises 4 sets of 4 curved filter arms, each set comprising a curved first filter arm 101'comprising a curved first hollow tube 10' having a first end 11', a second end 12', a curved first hollow tube inner fluid channel 13' having an inner diameter 14'; a curved second filter arm 102' comprising a curved second hollow tube 20' having a first end 21', a second end 22', a curved second hollow tube inner fluid channel 23' having an inner diameter 24'; a curved third filter arm 103' comprising a curved third hollow tube 30' having a first end 31', a second end 32', a curved third hollow tube inner fluid channel 33' having an inner diameter 34'; and a curved fourth filter arm 104' comprising a curved fourth hollow tube 40' having a first end 41', a second end 42', a curved fourth hollow tube inner fluid channel 43' having an inner diameter 44'; and the filter further comprises, communicating with each set of 4 curved filter arms, a curved first tube connector 60', comprising a curved first hollow body 65', having a first end 61', and a second end 62', a curved first hollow body inner fluid channel 63' having a curved first hollow body inner diameter 64', wherein the curved first tube connector is connected to, and in fluid communication with, the second ends 12', 22', 32', 42' of the curved first, second, third, and fourth hollow tubes 10', 20', 30', 40' wherein the curved first hollow body inner diameter 64' is greater than each of the curved tube inner fluid channel inner diameters 14', 24', 34', and 44', wherein the curved filter 400' further comprises, commonly communicating with each of the 4 curved first tube connectors, a curved second tube connector 70', comprising a curved second hollow body 75', having a first end 71', and a second end 72' (the curved second tube connector having a total length L3'), a curved second hollow body inner fluid channel 73' having a curved second hollow body inner diameter 74', wherein the first end 71' of the curved second tube connector 70' is connected to, and in fluid communication with, the second ends 62' of the curved first hollow bodies 65', wherein the curved second hollow body inner diameter 74' is greater than the curved first hollow body inner diameters 64', and the curved first hollow body inner diameter 64' is greater than each of the curved tube inner fluid channel inner diameters 14', 24', 34', and 44'. In this illustrated aspect, all of the sets of 4 curved filter arms have the same length L1', the curved first connector has a length L2', and the curved second connector has a length L3' wherein L1'>L2'>L3'.

Similar to the discussion with respect to, for example, the aspect illustrated in Figures 2A-2E, the relationships between the lengths of the curved filter arms, curved first connectors, and curved second connectors, are not limited to those as illustrated, the various lengths can be all equal, or two can be equal, or, for example, L1'<L2'>L3', etc. Additionally, or alternatively, in those aspects including a plurality of filters, the relationships between the lengths of the filter arms, first connectors, and second connectors, can be different for different filters in the same filter device.

Figures 9A-9D show a filter according to another aspect of the invention, including a plurality of sets of filter arms, each filter arm comprising a hollow tube having a tapered inner diameter, the filter further comprising: first tube connectors comprising first hollow bodies comprising tapered inner diameters, connected to, and in fluid communication with, the sets of hollow tubes; and, a second tube connector, comprising a second hollow body having a tapered inner diameter, connected to, and in fluid communication with, the first hollow bodies, wherein the illustrated filter is arranged for "outside-in" filtration, wherein the first ends and the walls of the hollow tubes are porous.

In accordance with the aspect illustrated in Figures 9A-9D, a filter 400" comprises 4 sets of 4 filter arms, each set comprising a first filter arm 101" comprising a first hollow tube 10" having a first end 11", a second end 12", a first hollow tube inner fluid channel 13" having a tapered inner diameter 14", wherein the inner diameter 14"A is greater at the first end than the inner diameter 14"B at the second end; a second filter arm 102" comprising a second hollow tube 20" having a first end 21", a second end 22", a second hollow tube inner fluid channel 23" having a tapered inner diameter 24", wherein the inner diameter 24"A is greater at the first end than the inner diameter 24"B at the second end; a third filter arm 103" comprising a third hollow tube 30" having a first end 31", a second end 32", a third hollow tube inner fluid channel 33" having a tapered inner diameter 34", wherein the inner diameter 34"A is greater at the first end than the inner diameter 34"B at the second end; and a fourth filter arm 104" comprising a fourth hollow tube 40" having a first end 41", a second end 42", a fourth hollow tube inner fluid channel 43" having a tapered inner diameter 44", wherein the inner diameter 44"A is greater at the first end than the inner diameter 44"B at the second end; and the filter further comprises, communicating with each set of 4 filter arms, a first tube connector 60", comprising a first hollow body 65", having a first end 61", and a second end 62", a first hollow body inner fluid channel 63" having a first hollow body tapered inner diameter 64", wherein the inner diameter 64" A is greater at the first end than the inner diameter 64"B at the second end, wherein the first tube connector is connected to, and in fluid communication with, the second ends 12", 22", 32", 42" of the first, second, third, and fourth hollow tubes 10", 20", 30", 40" wherein the first hollow body inner diameter 64"A, 64"B is greater at each end of the first hollow body than the inner diameters 14" A, 14"B, 24"A, 24"B, 34" A, 34"B, 44" A, 44"B at each end each of the hollow tubes, wherein the filter 400" further comprises, commonly communicating with each of the 4 first tube connectors, a second tube connector 70", comprising a second hollow body 75", having a first end 71", and a second end 72" (the second tube connector having a total length LI"), a second hollow body inner fluid channel 73" having a second hollow body tapered inner diameter 74", wherein the inner diameter 74"A is greater at the first end than the inner diameter 74"B at the second end; wherein the first end 71" of the second tube connector 70" is connected to, and in fluid communication with, the second ends 62" of the first hollow bodies 65", wherein the second hollow body tapered inner diameter 74" A, 74"B is greater at each end of the second hollow body than the inner diameters 64" A, 64"B at each end each of the first hollow body 65". In this illustrated aspect, all of the sets of 4 filter arms have the same length L1", the first connector has a length L2", and the second connector has a length L3" wherein L1">L2">L3".

In some aspects, there are different thicknesses of the walls of the hollow tubes, first connectors, and the second connectors, wherein the walls of the hollow tubes are thinner than the walls of the first tube connectors, and the walls of the first tube connectors are thinner than the walls of the second tube connectors.

One or more aspects of filters (including first filters and/or second filters and/or curved filters and/or tapered filters) or filter arrangements are typically disposed in a housing comprising at least one inlet and at least one outlet and defining at least one fluid flow path between the inlet and the outlet, wherein the filter(s)/filter arrangements are across the fluid flow path, to provide a filter device. Preferably, the filter device is sterilizable. Any housing of suitable shape and providing at least one inlet and at least one outlet may be employed.

Figures 5A-5C illustrate an aspect of a filter device 600, comprising a housing 605 having an inlet 601 and an outlet 602 and defining a fluid flow path between the inlet and the outlet, the filter device including a filter arrangement 501 including a plurality of filters 400 mounted on a barrier 610, arranged in the housing across the fluid flow path. As shown in more detail in Figures 5C and 5D, the filters are arranged for "outside-in" filtration flow, wherein the first ends and the walls of the hollow tubes are porous.

Figures 6A-6D illustrate another aspect of filter device 600A comprising a housing 605A having an inlet 601A and an outlet 602A and defining a fluid flow path between the inlet and the outlet, the filter device including a filter arrangement 501' including a plurality of filters 400, 400A, and 400B mounted on a barrier 610A, arranged in the housing across the fluid flow path. In contrast with other illustrated aspects of filters 400, the filters 400, 400A and 400B as illustrated in Figure 6B have different lengths for the respective filter arms, first connectors, and second connectors. As shown in more detail in Figure 6B, the filters are arranged for "outside-in" filtration, wherein the first ends and the walls of the hollow tubes are porous.

Figures 8A-8F show another aspect filter device 600' comprising a filter housing 605' having an inlet 601' and an outlet 602' and defining a fluid flow path between the inlet and the outlet, with the filter 400' shown in Figures 7A-7F mounted on a barrier 610' arranged in the housing across the fluid flow path according to an aspect of the invention. As shown in more detail in Figure 8C, the illustrated filter is arranged for "outside-in" filtration, wherein the first ends and the walls of the hollow tubes are porous.

Figures 10A-10C show another aspect filter device 600" comprising a filter housing 605" having an inlet 601" and an outlet 602" and defining a fluid flow path between the inlet and the outlet, with the filter 400" shown in Figures 9A-9D mounted on a barrier 610" arranged in the housing across the fluid flow path according to an aspect of the invention, wherein the illustrated filter is arranged for "outside-in" filtration, and wherein the first ends and the walls of the hollow tubes are porous.

If desired, aspects of the invention can be utilized in closed and sterile systems. As used herein, the term "closed" refers to a system that allows the collection and processing (including filtration, and, if desired, the manipulation, e.g., separation of portions, separation into components, storage, and preservation) of fluid, without exposing the contents of the system to the environment in which it is being used. A closed system can be as originally made, or result from the connection of system components of sanitary fittings including sterile docking devices.

The hollow tubes (e.g., the closed ends and side walls; and in some aspects, the walls of the first and second tube connectors) can have any suitable pore structure, e.g., a pore size (for example, as evidenced by bubble point, or by K_{L} as described in, for example, U.S. Patent 4,340,479, or evidenced by capillary condensation flow porometry), a mean flow pore (MFP) size (e.g., when characterized using a porometer, for example, a Porvair Porometer (Porvair plc, Norfolk, UK), or a porometer available under the trademark POROLUX (Porometer.com; Belgium)), a pore rating, a pore diameter (e.g., when characterized using the modified OSU F2 test as described in, for example, U.S. Patent 4,925,572), or removal rating media. The pore structure used depends on the size of the particles to be utilized, the composition of the fluid to be treated, and the desired effluent level of the treated fluid. In those aspects wherein the walls of the first and/or second tube connectors are porous (e.g., in some aspects wherein the hollow tubes and tube connectors are made from the same material), the pore structure of the tube connector walls is no greater than the pore structure of the walls of the hollow tubes.

A filter or filter arrangement can have any desired critical wetting surface tension (CWST, as defined in, for example, U.S. Patent 4,925,572). The CWST can be selected as is known in the art, e.g., as additionally disclosed in, for example, U.S. Patents 5,152,905, 5,443,743, 5,472,621, and 6,074,869. Typically, the filter element has a CWST of at least about 17 dynes/cm (about 17 x 10⁻⁵ N/cm), for example, a CWST in the range of from about 17 dynes/cm to about 90 dynes/cm (about 17 x 10⁻⁵ N/cm to about 90 x 10⁻⁵ N/cm), more typically in the range of about 50 dynes/cm to about 60 dynes/cm (about 50 x 10⁻⁵ N/cm to about 60 x 10⁻⁵ N/cm).

The surface characteristics of a filter or filter arrangement can be modified (e.g., to affect the CWST, to include a surface charge, e.g., a positive or negative charge, and/or to alter the polarity or hydrophilicity of the surface) by wet or dry oxidation, by coating or depositing a polymer on the surface, or by a grafting reaction.

Any aspects of the filters and/or filter arrangements can include additional elements, layers, or components, that can have different structures and/or functions, e.g., at least one of any one or more of the following: prefiltration, support, drainage, spacing and cushioning. Illustratively, the filter can also include at least one additional element such as a mesh and/or a screen.

In accordance with aspects of the invention, filters and filter arrangements can have a variety of configurations, including planar, pleated, and hollow cylindrical.

Filters, and filter arrangements (including filter arms and tube connectors) and housings according to aspects of the invention are preferably monolithic, and preferably manufactured via additive manufacturing (sometimes referred to as "additive layer manufacturing" or "3D printing"). They are typically formed by repeated depositions of a metal powder bound together with an activatable binder (e.g., binder jetting, sometimes referred to as "drop on powder"), typically followed by agglomerating the powder, e.g., by sintering. Other suitable methods include extrusion (e.g., paste extrusion, fused filament fabrication and fused deposition modelling) and light polymerization (e.g., stereolithography apparatus (SLA), and digital light processing (DLP)).

Filters, filter arms, and filter arrangements and housings can be manufactured together via additive manufacturing in a continuous operation at substantially the same time.

Any suitable additive manufacturing equipment can be used, and a variety of production 3D printers are suitable and commercially available.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and "at least one" and similar referents in the context of describing the invention (especially in the context of the following claims) are to be construed to cover both the singular and the plural, unless otherwise indicated herein or clearly contradicted by context. The use of the term "at least one" followed by a list of one or more items (for example, "at least one of A and B") is to be construed to mean one item selected from the listed items (A or B) or any combination of two or more of the listed items (A and B), unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred aspects of this invention are described herein, including the best mode known to the inventors for carrying out the invention. Variations of those preferred aspects may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A filter comprising a plurality of filter arms, the plurality of filter arms comprising at least:
a first filter arm comprising a first hollow tube, the first hollow tube having a first end and a second end, and a first tube inner fluid channel having an inner diameter; and,
a second filter arm comprising a second hollow tube, the second hollow tube having a first end and a second end, and a second tube inner fluid channel having an inner diameter;
the filter further comprising a first tube connector, comprising a first hollow body having a first hollow body inner diameter, connected to, and in fluid communication with, the first and second hollow tubes, wherein the first hollow body inner diameter is greater than the first and second tube inner fluid channel inner diameters.

2. A filter comprising a plurality of filter arms, the plurality of filter arms comprising at least:
a first filter arm comprising a first hollow tube, the first hollow tube having a first end and a second end, and a first tube inner fluid channel having an inner diameter; and,
a second filter arm comprising a second hollow tube, the second hollow tube having a first end and a second end, and a second tube inner fluid channel having an inner diameter;
the filter further comprising:
a first tube connector, comprising a first hollow body having a first hollow body inner diameter, connected to, and in fluid communication with, the first and second hollow tubes, wherein the first hollow body inner diameter is greater than the first and second tube inner fluid channel inner diameters;
and,
a second tube connector, comprising a second hollow body having a second hollow body inner diameter, connected to, and in fluid communication with, the first hollow body, wherein the second hollow body inner diameter is greater than the first hollow body inner diameter.

3. A filter arrangement comprising:
at least one first filter, the at least one first filter comprising a plurality of filter arms, the plurality of filter arms comprising at least:
a first filter arm comprising a first hollow tube, the first hollow tube having a first end and a second end, and a first tube inner fluid channel having an inner diameter; and,
a second filter arm comprising a second hollow tube, the second hollow tube having a first end and a second end, and a second tube inner fluid channel having an inner diameter;
the first filter further comprising:
a first tube connector, comprising a first hollow body having a first hollow body inner diameter, connected to, and in fluid communication with, the first and second hollow tubes, wherein the first hollow body inner diameter is greater than the first and second tube inner fluid channel inner diameters;
and
at least one second filter, the at least one second filter comprising a plurality of filter arms, the plurality of filter arms comprising at least:
a first filter arm comprising a first hollow tube, the first hollow tube having a first end and a second end, and a first tube inner fluid channel having an inner diameter; and,
a second filter arm comprising a second hollow tube, the second hollow tube having a first end and a second end, and a second tube inner fluid channel having an inner diameter;
the filter further comprising:
a first tube connector, comprising a first hollow body having a first hollow body inner diameter, connected to, and in fluid communication with, the first and second hollow tubes, wherein the first hollow body inner diameter is greater than the first and second tube inner fluid channel inner diameters;
and,
a second tube connector, comprising a second hollow body having a second hollow body inner diameter, connected to, and in fluid communication with, the first hollow body, wherein the second hollow body inner diameter is greater than the first hollow body inner diameter.

4. A curved filter comprising a plurality of curved filter arms, the plurality of curved filter arms comprising at least:
a first curved filter arm comprising a curved first hollow tube, the curved first hollow tube having a first end and a second end, and a curved first tube inner fluid channel having an curved first tube inner diameter; and,
a second curved filter arm comprising a curved second hollow tube, the curved second hollow tube having a first end and a second end, and a curved second tube inner fluid channel having curved second tube inner diameter;
the curved filter further comprising:
a curved first tube connector, comprising a curved first hollow body having a first hollow body inner diameter, connected to, and in fluid communication with, the curved first and second hollow tubes, wherein the curved first hollow body inner diameter is greater than the curved first and second tube inner fluid channel inner diameters;
and,
a curved second tube connector, comprising a curved second hollow body having a curved second hollow body inner diameter, connected to, and in fluid communication with, the curved first hollow body, wherein the curved second hollow

5. A filter comprising a plurality of filter arms, the plurality of filter arms comprising at least:
a first filter arm comprising a first hollow tube, the first hollow tube having a first end and a second end, and a first tube inner fluid channel having a tapered inner diameter wherein the inner diameter is narrower at the first end, and wider at the second end; and,
a second filter arm comprising a second hollow tube, the second hollow tube having a first end and a second end, and a second tube inner fluid channel having a tapered inner diameter wherein the inner diameter is narrower at the first end, and wider at the second end;
the filter further comprising:
a first tube connector, comprising a first hollow body having a first end and a second end, and a first hollow body tapered inner diameter, connected to, and in fluid communication with, the first and second hollow tubes, wherein the first hollow body has an inner diameter that is narrower at the first end of the first tube connector where it connects with the first and second hollow tubes, and wider at the second end of the first tube connector, wherein the first hollow body inner diameter is greater at both the first end and the second end than the inner diameters at both the first end and second end of each of the first and second hollow tubes;
and,
a second tube connector, comprising a second hollow body having a first end and a second end, and a second hollow body tapered inner diameter, connected to, and in fluid communication with, the first hollow body, wherein the second hollow body has an inner diameter that is narrower at the first end of the second tube connector where it connects with the first tube connector, and wider at the second end of the second tube connector, wherein the second hollow body inner diameter is greater at both the first end and the second end than the inner diameters at both the first end and second end of the first tube connector.

6. A filter device comprising a filter housing having an inlet and an outlet and defining a fluid flow path between the inlet and the outlet, and the filter of any one of claims 1, 2, 4, or 5, or at least one filter arrangement of claim 3, arranged in the housing across the fluid flow path.

7. A method filtering a fluid, comprising passing the fluid through the filter of any one of claims 1, 2, 4, or 5, or at least one filter arrangement of claim 3, or the filter device of claim 6.
